# EUROPÄISCHE PATENTANMELDUNG

(11) **EP 1 241 892 A1**
(43) Veröffentlichungstag der Anmeldung: **18.09.2002**
(21) Anmeldenummer: 01105589.4
(22) Anmeldetag: 06.03.2001
(51) Int. Cl.: H04N 7/26, H04N 7/50, G06F 7/544, G06T 1/20, G06T 9/00, G06F 9/302

(54) **Hardware-Accelerator eines Systems zur Videoverarbeitung**

(71) Anmelder: SIEMENS AKTIENGESELLSCHAFT, 80333 München (DE)
(72) Erfinder: Schaefer, Joerg, 81369 München (DE)

(57) **Zusammenfassung**

In einem Hardware-Accelerator zur Videoverarbeitung mit einer Vielzahl paralleler Processing Elements zur Bewegungsschätzung, Prediktion, Bewegungskompensation und Rekonstruktion werden vor dem Processing Element anstehende Daten oder im Processing Element entstehende Zwischenergebnisse einer Weiterverarbeitung zugeführt.

## Beschreibung

Die Erfindung betrifft eine Beschleunigungsvorrichtung, im folgenden als Hardware-Accelerator bezeichnet, für ein System zur Videoverarbeitung, worunter einer Vorrichtung zur Encodierung und Decodierung von Videodaten verstanden wird.

Eine Digitalisierung eines Videobildes oder einer Videosequenz ergibt bei einer ausreichenden räumlichen und farblichen Auflösung eine große Menge digitaler Daten, da jedes Bild durch eine vorgegebene Anzahl von Pixeln angenähert wird. Dabei wird jedes Pixel beispielsweise durch einen Grauwert und zwei Farbdifferenzwerte oder durch drei Farbwerte R, G und B dargestellt. Eine Übertragung dieser digitalen Videodaten, die sowohl leitungsgebunden als auch mittels eines Trägers (Funk, Licht etc.) erfolgen kann, benötigt daher große Leitungskapazitäten. Ferner wird zur direkten Speicherung derartiger Videodaten ebenfalls ein Speichermedium mit großer Kapazität benötigt.

Um eine Übertragung und Speicherung derartiger Daten in wirtschaftlicher Form zu ermöglichen, sind Datenreduktions- oder Datenkompressionsverfahren entwickelt worden, die eine Verringerung der Datenmenge durch die Entfernung redundanter und/oder irrelevanter Daten bewirken. Je nach Anwendungsbedarf oder benötigtem Kompressionsfaktor gibt es unterschiedliche Videocodier-Standards, beispielsweise die Verfahren nach MPEG-4 oder H.263. Eine Definition oder Beschreibung derartiger Verfahren ist den jeweiligen Standards zu entnehmen, die beispielsweise im Internet zu finden sind.

Derartige hochkomprimierende Verfahren basieren auf dem Einsatz verschiedener Algorithmen, wie beispielsweise Prediktion, Bewegungsschätzung und -kompensation, Transformationscodierung, Quantisierung und Entropiecodierung und anderen. Diese Algorithmen können allein oder in Kombination miteinander angewendet werden, wie dies beispielsweise bei den oben genannten Standards der Fall ist.

Die dem Nutzer innerhalb des zukünftigen UMTS-Standards für den Mobilfunk zur Verfügung gestellten breitbandigen Übertragungskanäle ermöglichen die Übertragung von Bilddaten, so daß beispielsweise über ein UMTS-Mobilteil der Anschluß eines PCs an das Internet und die Übertragung von Bilddaten zumindest über den Downlink möglich wird.

Eine solche hochdatenratige Übertragung von Bildinformationen bedingt auch hierbei den Einsatz von Kompressionsstandards, wobei insbesondere die oben genannten Standards H.263 und MPEG-4 zum Einsatz gelangen werden.

Innerhalb der genannten Standards werden eine Vielzahl von Funktionsblöcken zur Berechnung der Algorithmen ausgeführt, wobei das Hauptproblem die Zuordnung der Funktionsblöcke der Videoencodierung/decodierung innerhalb eines Systems zur Videoverarbeitung zu entsprechenden Schaltungs- oder Recheneinheiten ist.

Üblicherweise werden die zur Encodierung und Decodierung notwendigen Berechnungen auf einem geeigneten Prozessor durchgeführt. Zur Entlastung des Prozessors werden sogenannte Hardware-Beschleuniger, im folgenden als Hardware-Acceleratoren bezeichnet, eingesetzt, die spezielle Funktionsblöcke, nämlich die Bewegungsschätzung, berechnen. Die zur Bewegungsschätzung notwendige Schaltung umfaßt ferner die notwendige Interpolation von Halbpixelpositionen und Nachbildung von Bildelementen, die örtlich außerhalb des Bildes liegen (Padding), sowie eine Arithmetikschaltung. Die Interpolation und das Padding dienen zum Aufbereiten der in einem Bildspeicher gespeicherten Bilddaten zur weiteren Verarbeitung durch die Arithmetikeinheit der Bewegungsschätzung. Die Arithmetikeinheit führt eine n-fache Parallelverarbeitung durch, die durch sog Processing Elements durchgeführt wird. Weitere Funktionen des Videoencoders werden im Hardware-Accelerator nicht berücksichtigt. Diese weiteren Funktionen werden entweder im Prozessor oder in einer weiteren speziellen Hardware durchgeführt. Damit wird folglich der Prozessor belastet oder der Implementierungsaufwand in Hardware steigt.

Der Erfindung liegt daher die Aufgabe zugrunde, die Leistungsfähigkeit eines HW-Accelerators für ein System zur Videoverarbeitung zu erhöhen.

Diese Aufgabe wird durch die Merkmale des Anspruchs 1 gelöst. Bevorzugte Ausführungsformen der Erfindung sind Gegenstand der Unteransprüche.

In der vorgeschlagenen Lösung werden die PEs (Processing Elements) erweitert, um weitere Funktionen des Videoencoders/decoders in den bereits vorhandenen HW-Accelerator auszulagern. Der Prozessor wird durch Erweiterungen des HW-Accelerators entlastet und die gegebenen Datenpfade des Accelerators werden effektiver genutzt. Dies betrifft speziell die komplexen Multiplexerstrukturen für die Mehrfachzugriffe, die Interpolation der Halbpixelpositionen und das Padding von Pixelpositionen außerhalb des Bildes.

Die Erweiterung der arithmetischen Module betrifft in einer ersten bevorzugten Ausführungsform die Prediktion. Die Zwischenergebnisse aus einer ersten Subtrahiererstufe entsprechen für den gefundenen Bewegungsvektor dem benötigten Prediktionsergebnis und werden entweder auf einen Puffer geführt, der Bestandteil des existierenden Systemspeichers sein kann, oder auf Anforderung mit den letzten Acceleratoreinstellungen generiert.

In einer zweiten bevorzugten Ausführungsform werden die existierenden Zugriffseinheiten auf den Bildspeicher (Multiplexer, Halbpixelinterpolation, Padding) für die Bewegungskompensation genutzt. Die dafür erforderliche Adressberechnung wird somit in den HW-Accelerator ausgelagert. Mit anderen Worten, das am Eingang des PE anstehende zugehörige Pixel eines Suchbereichs S_{i+x,j+y} wird beispielsweise an den Prozessor als bewegungskompensiertes Datum weitergeleitet.

In einer dritten bevorzugten Ausführungsform, in der die erste Subtrahiererstufe um eine Addition erweitert ist, kann zusätzlich die Rekonstruktion aus der Softwareimplementierung (Prozessor) in den HW-Accelerator ausgelagert werden. Mit geringem Mehraufwand sind somit zusätzlich zur Bewegungsschätzung die Prediktion, die Bewegungskompensation (im Sinne des Zugriffs auf den Suchbereich mit den letzten Acceleratoreinstellungen) und die Rekonstruktion als Bestandteile des Videoencoders im HW-Accelerator berechenbar. Hier kann neben einem Referenzpixel Y_{i,j} wahlweise, beispielsweise mittels eines Multiplexers, die Ausgangswerte D_{i,j} der entsprechenden inversen DCT in das PE eingegeben werden, wodurch eine Weiterleitung oder Speicherung der Pixeldifferenz (Y_{i,j} - S_{i+x,j+y}), der bewegungskompensierten (S_{i+x,j+x}) und rekonstruierten (D_{i,j} + S_{i+x,j+y}) Daten für den gefundenen Bewegungsvektor möglich wird.

Vorzugsweise kann ein zusätzlicher Puffer implementiert werden, der für die Zwischenspeicherung der IDCT-Resultate (IDCT: Inverse Discrete Cosine Transformation) zur Verfügung steht.

Die Rekonstruktion und die Bewegungskompensation sind Bestandteil des Dekoderzweiges des Encoders (dies entspricht nicht dem Videodecoder im Sinne einer Empfangsfunktion des Endgerätes).

Man betrachte beispielsweise ein System, in dem Videoencodierung und -decodierung realisiert werden (z.B. ein bidirektional arbeitendes Endgerät), daß heißt, es werden ein Videoencoder und ein -decoder implementiert, welche zeitversetzt auf dem selben System (Prozessor/Accelerator-Kombination) arbeiten. Wird jetzt im Zuge der Decodierung eines empfangenen Bildes der Zugriff durch den HW-Accelerator auf das letzte decodierte Bild in ähnlicher Form gewährleistet, wie im Videoencoder (durch Laden des Cache oder die entsprechende Gestaltung des RAM), so können die gegebenen Datenpfade des HW-Accelerators für den Videodecoder erneut genutzt werden.

Die Nutzung gegebener Acceleratorstrukturen für Funktionen der Videoencodierung/decodierung über die Bewegungsschätzung hinaus ermöglicht sowohl eine effektivere Nutzung der bereits implementierten Hardware als auch die Freigabe von Prozessorleistung für andere Aufgaben im System. Hintergrund ist dabei die Abbildung unterschiedlicher Funktionsmodule auf die HW-Acceleratorstruktur.

Die erfindungsgemäße Vorrichtung ist für mobile Bildtelefone konzipiert, in denen zur Unterstützung des Prozessors ein Hardware-Accelerator für die Bewegungsschätzung im Zuge der Videoencodierung (H.263, MPEG-4) und für weitere Aufgaben (hier Bildstabilisierung) eingesetzt wird. Eine Nutzung in nicht mobilen Endgeräten ist in gleicher Weise möglich.

Der erfindungsgemäße HW-Accelerator läßt sich ebenfalls bei der Implementierung des Videodecoders in bidirektional arbeitenden Endgeräten verwenden.

Bevorzugte Ausführungsformen und Ausgestaltungen der Erfindung werden nachfolgend anhand der Zeichnungen erläutert. In den Figuren zeigen
- Fig. 1: eine prinzipielle Darstellung eines Systems zur Videoverarbeitung,
- Fig. 2: die Funktionsmodule eines Videoencoders/decoders,
- Fig. 3: den Datenpfad zum Zugriff auf den Suchbereich,
- Fig. 4: ein Processing Element zur Bewegungsschätzung,
- Fig. 5: eine erste erfindungsgemäße Ausführungsform eines Processing Elements,
- Fig. 6: eine zweite erfindungsgemäße Ausführungsform eines Processing Elements, und
- Fig. 7: eine dritte erfindungsgemäße Ausführungsform eines Processing Elements,

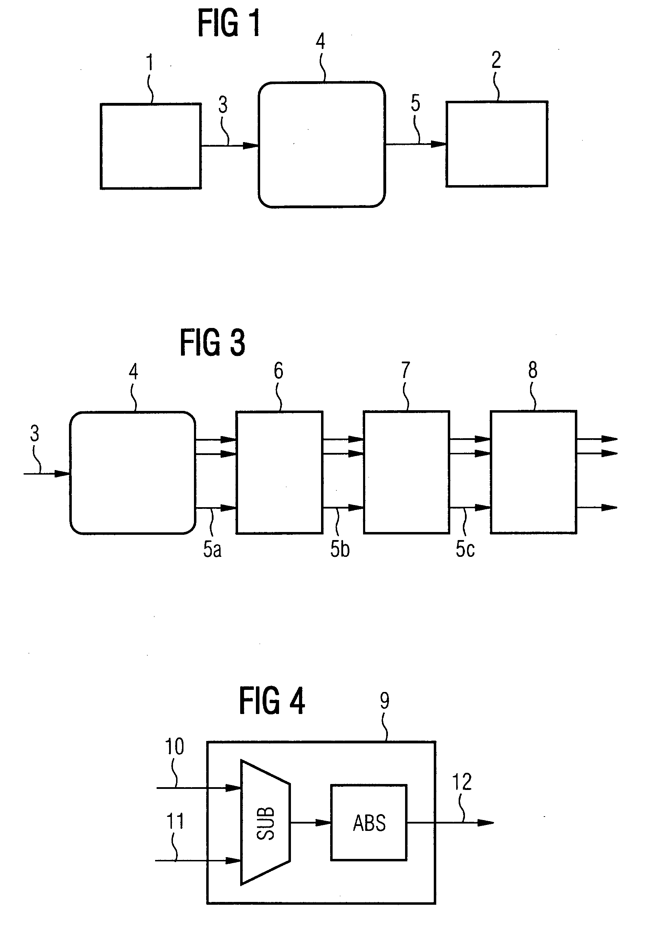

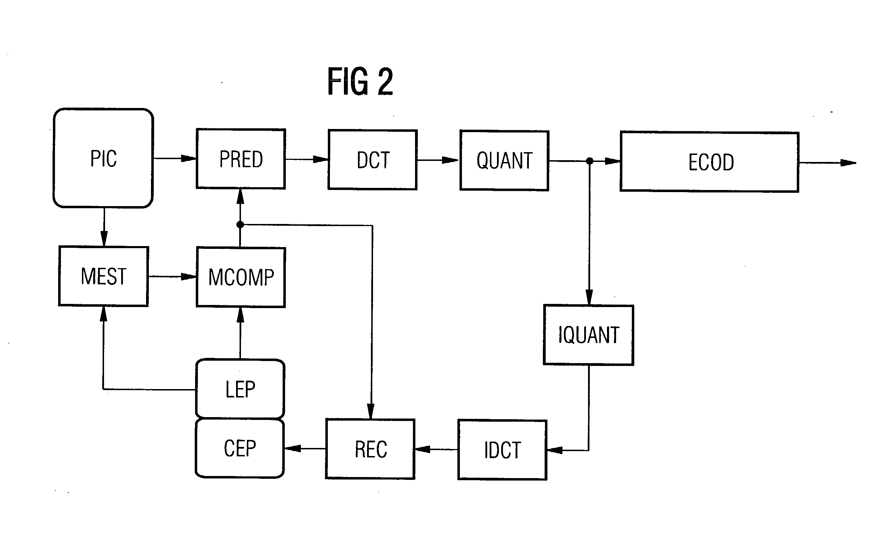

Ein System zur Videoverarbeitung ist in Fig. 1 dargestellt und besteht im wesentlichen aus einem Prozessor 1 für die Videoverarbeitung, beispielsweise einem RISC-Prozessor oder dergleichen mit einer 32bit Systemarchitektur, der durch einen Hardware-Accelerator 2 für rechenintensive Aufgaben unterstützt wird. Diese Variante findet beispielsweise in mobilen Endgeräten Anwendung. Die Systemarchitektur wird durch die Prozessorarchitektur vorgegebenen. Das System umfaßt daher bei einem 32-Bit-Prozessor einen Systembus 3 mit einer Breite von 32 Bit, der den Prozessor 1 mit einem Speicher 4 verbindet, der als Such- und Referenzbereich für Bilddaten, d.h. als Video-RAM, dient. Dieser Speicher 4 ist über einen weiteren Bus 5 mit dem HW-Accelerator 2 verbunden, wobei die Architektur des zur Beschleunigung der Bilddatenbearbeitung dienenden HW-Accelerators 2 durch den nötigen Datendurchsatz bestimmt wird und im allgemeinen nicht dem Speicherzugriff im Sinne der Systemarchitektur entspricht. Mit anderen Worten, die Breite des HW-Busses 5 richtet sich nach den benötigten Mehrfachzugriffen des HW-Accelerators 2 auf den Video-Speicher 4. Andere Anordnungen sind möglich, beispielsweise kann der HW-Accelerator über einen Cache-Speicher (nicht dargestellt) zum Schnellen Zugriff verfügen, wobei der Cache-Speicher seine Bild- oder Video-Daten vom Video-Speicher 4 erhält.

Der HW-Accelerator 2 übernimmt zur Entlastung des Prozessors 1 die rechenintensive Bewegungsschätzung im Zuge der Encodierung und kann ferner auch für die Bildstabilisierung im System verwendet werden. Der Prozessor 1 mit seiner verbleibenden Encoderfunktionalität verarbeitet aufgrund seiner Architektur im wesentlichen einzelne Pixel. Ein Pixel entspricht üblicherweise einem Byte, im Beispiel (32bit Systemarchitektur) belegen somit vier Byte ein 32bit Wort des Speichers. Der HW-Accelerator 2 verarbeitet im Zuge der Bewegungsschätzung sinnvollerweise zwei oder mehr Pixel parallel. Seine Verarbeitungsbreite, wobei hier die Anzahl der parallel verarbeiteten Pixel/Bildelemente gemeint ist, wird durch den Leistungs- oder Performancebedarf bestimmt. Im Beispiel werden vier Pixel parallel verarbeitet. Um den nötigen parallelen Zugriff auf mehrere Bilddaten zu erreichen, wird dem HW-Accelerator, wie bereits im Vorangegangenen erwähnt, entweder ein spezieller Cache für die nötigen Bilddaten (aktueller Referenzbereich und aktueller Suchbereich) zugeordnet, der im Zuge der Bildverarbeitung nachgeladen wird oder der Systemspeicher (Video-Speicher 4) wird so gestaltet, daß der nötige Mehrfachzugriff, auch über die Systemarchitektur hinaus, möglich ist.

Fig. 2 zeigt die Funktionsmodule eines üblichen Videoencoders, wobei nur die Datenpfade für die Bilddaten dargestellt sind. Diese Funktionsmodule sind sowohl Bestandteil des Standards H263 als auch MPEG-4. Ein Videodecoder enthält im wesentlichen die gleichen Module, so daß auf eine Beschreibung hier verzichtet wird. Geräte, die sowohl encodieren als auch dekodieren, also Videoencoder/decoder, verwenden gleiche Funktionsmodule sowohl für die Encodierung als auch die Decodierung.

Zur Encodierung eines aktuellen Bildes PIC wird dieses in Makroblöcke unterteilt, wobei ein Makroblock beispielsweise aus 16x16 Bildpunkten Luminanz Y (dies entspricht 4 Blöcken zu je 8x8 Bildpunkte) und den zugeordneten Chrominanzblöcken C_{b} und Cᵣ mit je 8x8 Bildpunkten besteht. Diese Makroblöcke werden links oben beginnend von links nach rechts und von oben nach unten verarbeitet Beispielsweise besteht ein QCIF Bild aus 176x144 Pixel, d.h. aus 99 Makroblöcken.

Im ersten Schritt, der Bewegungsschätzung MEST, wird der Makroblock des aktuellen Bildes in einem eingeschränkten Bereich des letzten encodierten Bildes gesucht, der als Suchbereich bezeichnet wird. Diese Betrachtung gilt nur für INTER-Makroblöcke, d.h. falls eine Bewegungsschätzung mit einer entsprechenden Codierung durchgeführt wird. Die Größe dieses Suchbereichs entspricht dem laut Standard erlaubten Bereich für den Bewegungsvektor. Als Kriterium für die Suche dient beispielsweise die Summe der absoluten Differenzen, im folgenden als SAD bezeichnet. Die Pixelwerte des gesamten Makroblocks (oder auch der Teilblöcke nacheinander) des aktuellen Bildes werden für einzelne Positionen im Suchbereich von den zugehörigen Pixelwerten des letzten encodierten Bildes abgezogen und die Absolutwerte aufsummiert. Die SAD dient dann als Kriterium für eine gute Übereinstimmung. Die berechneten SADs für die einzelnen Positionen werden verglichen, die Position mit der geringsten SAD liefert dann den Bewegungsvektor für den aktuellen Makroblock in dem Funktionsblock MCOMP. Für diese Position (best match) werden dann die Pixeldifferenzen in PRED ermittelt und komprimiert. Encodiert und übertragen werden somit nur diese Differenzen und der zugehörige Bewegungsvektor. Dazu sind die Funktionsblöcke Diskrete Cosinustransformation DCT, Quantisierung QUANT und Entropiecodierung ECOD notwendig.

Die quantisierten Pixeldifferenzen durchlaufen die inverse Ouantisierung IQUANT und die inverse DCT IDCT und werden zu den Pixelwerten aus dem letzten encodierten Bild unter Berücksichtigung des Bewegungsvektors BV in dem Funktionsblock Rekonstruktion REC addiert. Dieses rekonstruierte aktuelle Bild wird in CEP abgelegt, da es zur Berechnung des Bewegungsvektors des nächsten Bildes eventuell benötigt wird. Im Encoder wird somit immer das gleiche (letztes encodiertes Bild) "decodiert" wie im Decoder auf der Empfängerseite (letztes decodiertes Bild). Der in MCOMP bestimmte aktuelle Bewegungsvektor benötigt das in LEP abgelegte rekonstruierte vorherige Bild.

Der Decoder (nicht dargestellt) empfängt den Entropie-encodierten Bitstrom. Dieser wird decodiert und dekomprimiert und liefert das decodierte Bild auf der Empfängerseite. Der Dekomprossionszweig ist auch Bestandteil des standardisierten Decoders, d.h., der Encoder beinhaltet, abgesehen von der Entropieencodierung, einen eigenen Decoder.

Fig. 3 zeigt die grobe Struktur dieser Zugriffsmechanismen bzw. des HW-Accelerators 2. Auf die Daten des mit dem Systembus 3 verbundenen Video-Speichers 4 wird über den HW-Bus 5a mit einer Breite größer als n Byte von einem Multiplexer 6 zugegriffen, der die Mehrfachzugriffe und das Padding, also die Nachbildung von Bildelementen, die örtlich außerhalb des Bildes liegen, realisiert. Nachfolgend dem Padding im Multiplexer 6 wird eine Interpolation 7 von Halbpixelpositionen realisiert, wobei die Interpolation 7 und der Multiplexer 6 über einen HW-Bus 5b der Breite n+1 Byte verbunden sind. Anschließend werden die Daten in einer Arithmetikeinheit 9 verarbeitet, wobei die Arithmetikeinheit 8 über einen HW-Bus 5c mit der Interpolation 7 verbunden ist und n parallele Verarbeitungselemente bzw. Processing Elements (nicht dargestellt) aufweist.

Fig. 4 zeigt das Detail eines bekannten Processing Elements 9, abgekürzt PE, wie es für die Bewegungsschätzung realisiert wird. Dieses PE 9 mit zwei Eingängen 10, 11 und einen Ausgang 12 und berechnet die absolute Differenz beider Eingangsdaten, im vorliegenden Fall eines Pixels Y_{i,j} des Referenzbereiches am Eingang 10 und des aktuellen Pixels S_{i+x,j+y} des Suchbereiches am Eingang 11 mittels einer ersten Funktionalität, nämlich einem Subtrahierer SUB, und einer nachfolgenden zweiten Funktionalität, hier einem Absolutwertbildner ABS. Diese berechneten absoluten Differenzen werden am Ausgang 12 ausgegeben und im Anschluß (parallel und schrittweise unter Berücksichtigung der block- oder makroblockweisen Verarbeitung) weiter verarbeitet, um das gewählte Kriterium für die Bewegungsschätzung zu berechnen, im Beispiel das Aufsummieren zur Berechnung der Summe der absoluten Differenzen.

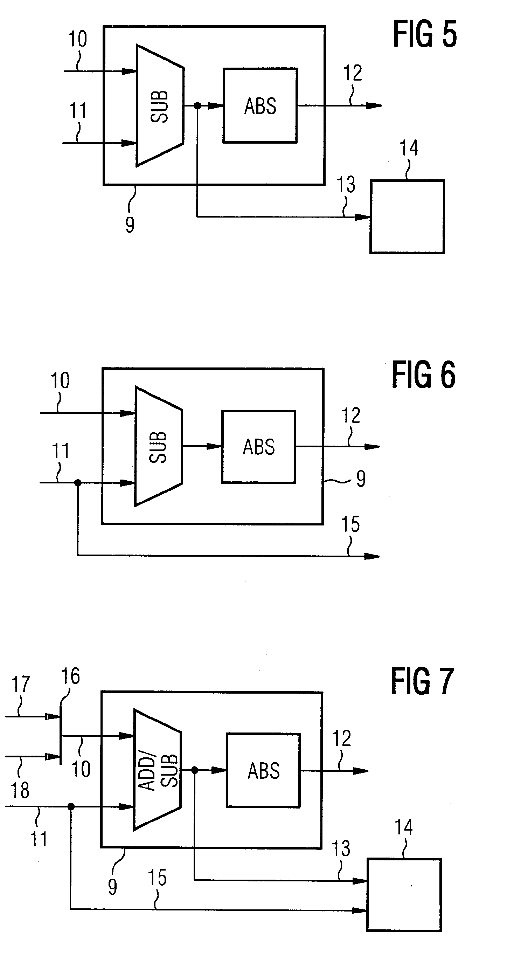

Fig. 5 zeigt die erste Ausführungsform des erfindungsgemäßen Processing Elements 9. Die Differenz Y_{i,j}-S_{i+x,j+y} der beiden oben genannten Eingangspixel wird hier vor der Absolutwertbildung mittels eines weiteren Ausgangs 13 nach außen geführt, beispielsweise zur Speicherung der Pixeldifferenz für den gefundenen Bewegungsvektor in einem Register 14. Dieses Ergebnis entspricht der Prediktion.

Fig. 6 zeigt eine zweite Ausführungsform des erfindungsgemäßen Processing Elements 9. Hier wird das am Eingang 11 anstehende zugehörige Pixel S_{i+x,j+y} des Suchbereichs, d.h. der bewegungskompensierten Daten, durch einen Abgriff 15 vor dem PE 9 weitergeleitet, beispielsweise an den Prozessor (nicht dargestellt) zur Speicherung in einem geeigneten Puffer.

Fig. 7 zeigt eine dritte Ausführungsform des erfindungsgemäßen Processing Elements 9, in dem die erste arithmetische Funktionalität, die in den vorherigen Ausführungsformen durch ein reinen Subtrahierer realisiert ist, um eine Addition erweitert ist. Mit anderen Worten, die erste Funktionalität ist in der dritten Ausführungsform durch einen Subtrahierer/Addierer SUB/ADD realisiert. Vor dem ersten Eingang 10 des PE 9 ist ein Selektor 16 oder Multiplexer angeordnet, der aus zwei Eingängen 17 und 18 auswählt. Je nach gewähltem Eingang 17, 18 des Selektors 16 wird die Subtraktions- oder Additions-Funktionalität der ersten Funktionseinheit ADD/SUB gewählt. Liegt beispielsweise am ersten Eingang 17 des Selektors 16 die Ausgangswerte der inversen DCT D_{i,j} an, so wird die Additions-Funktionalität des Addierers/Subtrahierers ADD/SUB geschaltet und es werden die rekonstruierten Daten (D_{i,j}+S_{i+x,j+y}) für den gefundenen Bewegungsvektor zusammen mit dem am zweiten Eingang 11 des PE anliegenden zugehörigen Pixels des Suchbereichs S_{i+x,j+y} berechnet und über den Abgriff 13 des PE 9 beispielsweise an ein Register 14 ausgegeben.

Wird das am zweiten Eingang des Selektors 16 anliegende Referenzpixel Y_{i,j} verwendet, so wird die Funktionalität des Addierers/Subtrahierers ADD/SUB auf Subtraktion geschaltet und es werden die Pixeldifferenzen aus dem Referenzpixel Y_{i,j} und dem am zweiten Eingang 11 des PE 9 anliegenden zugehörigen Pixel S_{i+x,j+y} des Suchbereichs berechnet und über den Abgriff 13 weitergeleitet oder zwischengespeichert, beispielsweise in einem Register 14. Ferner ist es auch hier möglich, das zugehörige Pixel S_{i+x,j+y} des Suchbereichs, d.h. die bewegungskompensierten Daten, über einen Abgriff 15 ebenfalls auf das Register 14 zu leiten.

## Patentansprüche

1. Hardware-Accelerator zur Videoverarbeitung mit einer Vielzahl paralleler Processing Elements (9) zur Bewegungsschätzung, Prediktion, Bewegungskompensation und Rekonstruktion, **dadurch gekennzeichnet, daß** vor dem Processing Element (9) anstehende Daten oder im Processing Element (9) entstehende Zwischenergebnisse ausgegliedert und einer Weiterverarbeitung zugeführt werden.

2. Hardware-Accelerator nach Anspruch 1, **dadurch gekennzeichnet, daß** ein Processing Element (9) mehrere Funktionseinheiten (ADD/SUB,SUB, ABS) zur Durchführung von Berechnungen aufweist.

3. Hardware-Accelerator nach Anspruch 2, **dadurch gekennzeichnet, daß** ein Processing Element (9) eine erste Funktionseinheit (ADD/SUB, SUB) und eine nachfolgende zweite Funktionseinheit (ABS) aufweist.

4. Hardware-Accelerator nach Anspruch 3, **dadurch gekennzeichnet, daß** die erste Funktionseinheit durch einen Subtrahierer (SUB) oder einen Addierer/Subtrahierer (ADD/SUB) und die zweite Funktionseinheit durch einen Absolutwertbildner(ABS) gebildet werden.

5. Hardware-Accelerator nach Anspruch 4, **dadurch gekennzeichnet, daß** das Processing Element (9) zwei Eingänge (10, 11) für Daten aufweist, wobei die Eingangsdaten durch zwei Pixel gebildet werden und das Processing Element (9) die absolute Differenz der beiden Pixel zur weiteren Verarbeitung über einen Ausgang (12) ausgibt.

6. Hardware-Accelerator nach Anspruch 5, **dadurch gekennzeichnet, daß** die Differenz zwischen den beiden Pixeln für einen gefundenen Bewegungsvektor zur Weiterverarbeitung ausgegeben und/oder gespeichert wird.

7. Hardware-Accelerator nach Anspruch 5, **dadurch gekennzeichnet, daß** eines der beiden die Eingangsgrößen bildenden Pixel weitergeleitet wird.

8. Hardware-Accelerator nach einem der Ansprüche 5 bis 7, **dadurch gekennzeichnet, daß** die beiden Pixel durch ein Referenzpixel (Yᵢⱼ) und ein zugehöriges Pixel (S_{i+x,j+y}) eines Suchbereichs gebildet werden

9. Hardware-Accelerator nach Anspruch 7 und 8, **dadurch gekennzeichnet, daß** das zu dem Referenzpixel (Yᵢⱼ) zugehörige Pixel (S_{i+x,j+y}) des Suchbereichs weitergeleitet wird.

10. Hardware-Accelerator nach Anspruch 5, **dadurch gekennzeichnet, daß** die Addition der beiden die Eingangsgrößen bildenden Pixel für einen gefundenen Bewegungsvektor zur Weiterverarbeitung ausgegeben und/oder gespeichert wird.

11. Hardware-Accelerator nach Anspruch 8 und 10, **dadurch gekennzeichnet, daß** anstelle des Referenzpixels (Yᵢⱼ) der Wert einer inversen DCT (D_{i,j}) dem Processing Element (9) über den ersten Eingang (10) zugeführt wird, so daß das Processing Element (9) die rekonstruierten Daten (D_{i,j}+S_{i+x,j+y}) für einen gefundenen Bewegungsvektor ausgibt.

12. System zur Videobearbeitung mit einem Prozessor (1), einem Video-RAM (4) und einem Hardware-Accelerator (2) nach einem der vorangegangenen Ansprüche.

13. Verwendung des Systems nach Anspruch 12 in einer Mobilstation eines mobilen Funksystems mit mindestens einer Basisstation.
